**Europäisches Patentamt**

**European Patent Office**

**Office européen des brevets**

(19)

(11) Veröffentlichungsnummer : **0 576 711 B1**

(12)          # EUROPÄISCHE PATENTSCHRIFT

(45) Veröffentlichungstag der Patentschrift :
**05.04.95 Patentblatt 95/14**

(51) Int. Cl.$^6$ : **G06F 5/06**

(21) Anmeldenummer : **92111273.6**

(22) Anmeldetag : **03.07.92**

(54) **Datenverarbeitungssystem mit mehreren Taktfrequenzen.**

(43) Veröffentlichungstag der Anmeldung :
**05.01.94 Patentblatt 94/01**

(45) Bekanntmachung des Hinweises auf die
Patenterteilung :
**05.04.95 Patentblatt 95/14**

(84) Benannte Vertragsstaaten :
**AT BE CH DE ES FR GB IT LI NL SE**

(56) Entgegenhaltungen :
**US-A- 3 980 993**

(73) Patentinhaber : **Siemens Nixdorf
Informationssysteme Aktiengesellschaft
Fürstenallee 7
D-33102 Paderborn (DE)**

(72) Erfinder : **Ehmer, Christian
Ludmillastrasse 12
W-8000 München 90 (DE)**

(74) Vertreter : **Fuchs, Franz-Josef, Dr.-Ing. et al
Postfach 22 13 17
D-80503 München (DE)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Datenverarbeitungssystem, das aus mindestens zwei Systemeinheiten besteht, die untereinander Daten über einen gemeinsamen Speicher austauschen. Um einen möglichst sicheren Datenaustausch zu gewährleisten, werden beim Stand der Technik die von einer Systemeinheit gesendeten Daten mit einer ersten Taktflanke eines Taktes der empfangenden Systemeinheit in einen ersten Speicherteil geschrieben. Erst nach Beendigung des Einschwingvorganges (Metastabilität) des ersten Speicherteils wird die dann gesicherte Information mit der folgenden Taktflanke in einen zweiten Speicherteil geschrieben. Aus diesem zweiten Speicherteil übernimmt die empfangende Systemeinheit die zu ihr übertragenen Daten und quittiert den Empfang.

Unterscheiden sich die Taktfrequenzen der am Datenaustausch beteiligten Systemeinheiten oder sind die Takte bei gleicher Taktfrequenz nicht synchronisiert, dann müssen die zu übertragenden Signale vor einer Datenübertragung durch Umsetzer den jeweiligen Taktfrequenzen angepaßt werden. Für diese Art der Datenübertragung ist jedoch ein hoher Schaltungsaufwand erforderlich und außerdem wird ein Zeitgewinn, der durch den Betrieb mit maximaler Taktfrequenz der einzelnen Systemeinheiten erzielt werden kann, häufig wieder kompensiert. Zudem kann auch hier das Auftreten von Metastabilität nicht verhindert werden.

Verzichtet man auf die Ausnutzung der maximalen Taktfrequenz und betreibt sämtliche Systemeinheiten mit der Taktfrequenz der Systemeinheit mit der niedrigsten Verarbeitungsgeschwindigkeit, dann wird zwar der Schaltungsaufwand geringer, jedoch werden die Funktionsabläufe innerhalb der schnelleren Systemeinheiten verlangsamt. Die sogenannte Performance des Datenverarbeitungssystems sinkt. Zudem verbleibt bei fehlender Synchronisation der Takte der Systemeinheiten bei der Datenübertragung eine Restunsicherheit, die mit einer bestimmten Wahrscheinlichkeit zu einer fehlerhaften Datenübertragung auf Grund des Einschwingverhaltens der ersten Speicherstufe führt.

Aus US-A-3 980 993 ist ein Datenverarbeitungssystem bekannt, dessen Systemeinheiten Daten über ein gemeinsames Interface austauschen. Da die Systemeinheiten mit unterschiedlichen Taktfrequenzen arbeiten, die in einem ganzzahligen Verhältnis zueinander stehen, weist das Interface zwei Pufferstufen zur Datenübernahme auf. Die Systemeinheiten werden mit dem jeweils benötigten Takt in zwei Phasenlagen versorgt, wodurch die zeitlichen Beziehungen der Takte untereinander festgelegt sind. Der Datenaustausch zwischen den Systemeinheiten wird durch das Interface unter Ausnutzung der unterschiedlichen Taktphasen gesteuert.

Der Erfindung liegt die Aufgabe zugrunde, ein Datenverarbeitungssystem mit mindestens zwei Systemeinheiten, die untereinander über einen gemeinsamen Speicher Daten austauschen, so zu gestalten, daß jede Systemeinheit im Bereich ihrer maximalen Taktfrequenz betrieben werden kann und dennoch ein schneller und absolut sicherer Datentransfer zwischen den Systemeinheiten gewährleistet ist.

Diese Aufgabe wird erfindungsgemäß durch die im Patentanspruch 1 angegebenen Merkmale gelöst.

Eine Steuereinheit versorgt die einzelnen Systemeinheiten mit der ihnen zugeordneten Taktfrequenz. Die Steuereinheit ist so ausgelegt, daß die an ihren Ausgängen auftretenden Takt- und Steuersignale eine feste zeitliche Beziehung zueinander haben. So beginnen beispielsweise sämtliche systemeinheitspezifischen Takte gleichzeitig mit einer positiven Taktflanke. Dieser Anfangszustand wiederholt sich zu einem exakt benennbaren Zeitpunkt. Zwischen den jeweiligen Anfangszuständen ergibt sich ein bestimmtes Impulsdiagramm der Systemtakte. Dieses Impulsdiagramm wiederholt sich identisch von Anfangszustand zu Anfangszustand. Diese Tatsache wird nun erfindungsgemäß zu einer schnellen und sicheren Datenübertragung zwischen den Systemeinheiten genutzt.

Gemäß einer Weiterbildung und Ausgestaltung der Erfindung werden mehrere Datenverarbeitungssysteme zu einer Datenverarbeitungsanlage zusammengefaßt. Eine zentrale Signalisierungseinheit versorgt sämtliche Datenverarbeitungssysteme mit einem Grundtakt. Die auf solche Weise zusammengeschalteten Datenverabeitungssysteme sind zueinander taktsynchron, d.h. die Systemtakte stehen, vergleichbar mit den Takten innerhalb der Systemeinheiten, in einer festen zeitlichen Beziehung zueinander. Eine Datenübertragung von Datenverarbeitungssystem zu Datenverarbeitungssystem kann deshalb analog zum Datentransfer innerhalb eines Datenverarbeitungssystems erfolgen.

Weitere Ausgestaltungen und Weiterbildungen der Erfindung sind in weiteren Unteransprüchen angegeben.

Im folgenden wird ein Beispiel der Erfindung anhand der Zeichnung näher erläutert. Dabei zeigen

Figur 1 ein Blockschaltbild zweier Systemeinheiten, die über einen Übertragungsspeicher und eine Steuereinheit miteinander verbunden sind,

Figur 2 ein Impulsdiagramm eines Datentransfers von einer ersten Systemeinheit zu einer zweiten Systemeinheit,

Figur 3 ein Impulsdiagramm eines Datentransfers von der zweiten Systemeinheit zur ersten Systemeinheit,

Figur 4 ein Blockschaltbild einer Datenverarbeitungsanlage, die aus mehreren Datenverarbeitungssystemen besteht und

Figur 5 ein Blockschaltbild, das das Synchronisationsprinzip eines Datenverarbeitungssystems zeigt.

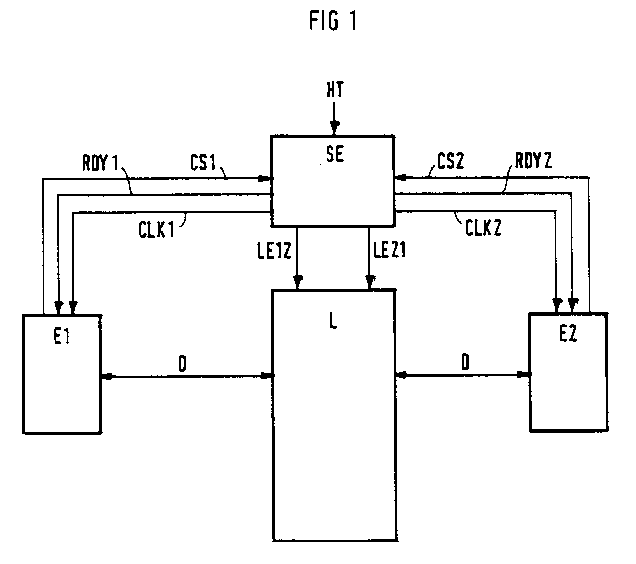

In Figur 1 ist ein Blockschaltbild eines Datenverarbeitungssystems mit einer ersten Systemeinheit E1 und einer zweiten Systemeinheit E2 dargestellt. Eine Systemeinheit E1, E2 kann z.B. eine Zentraleinheit, eine Ein-/Ausgangsschnittstelle usw. sein. Die beiden Systemeinheiten E1, E2 arbeiten unabhängig voneinander mit unterschiedlichen Taktfrequenzen, können aber über einen Übertragungsspeicher L Daten D miteinander austauschen. Der Übertragungsspeicher L ist ein zustandsgesteuerter Speicher, ein sogenannter Transparent-Speicher, der in der Lage ist, an seinem Eingang anliegende Daten D ohne eine entsprechende Taktflanke zu übernehmen. Dies führt zu einem Zeitgewinn, da die Daten D im Übertragungsspeicher früher verfügbar sind. Der Datentransfer zwischen den Systemeinheiten E1, E2 wird von einer Steuereinheit SE kontrolliert. Zu diesem Zweck ist die erste Systemeinheit E1 mit der Steuereinheit SE durch Leitungen zur Übertragung eines ersten Systemeinheit-Auswahlsignals CS1, eines ersten Gültigkeitssignals RDY1 und eines ersten Systemtaktes CLK1 verbunden. Die zweite Systemeinheit E2 ist durch entsprechende Leitungen zur Übertragung eines zweiten Systemeinheit-Auswahlsignals CS2, eines zweiten Gültigkeitssignals RDY2 und eines zweiten Systemtaktes CLK2 verbunden. Die Eingangs- und Ausgangsregister des Übertragungsspeichers L werden entsprechend der Übertragungsrichtung entweder durch ein erstes Speicher-Steuerungssignal LE12 oder ein zweites Speicher-Steuerungssignal LE21 von der Steuereinheit SE kontrolliert. Das erste Speicher-Steuerungssignal LE12 steuert dabei die Register für eine Datenübertragung von der ersten Systemeinheit E1 zur zweiten Systemeinheit E2 und das zweite Speicher-Steuerungssignal LE21 kontrolliert die Datenübertragung von der zweiten Systemeinheit E2 zur ersten Systemeinheit E1. Die Steuereinheit SE leitet sämtliche Steuersignale und Takte CLK von einem ihr zur Verfügung stehenden Hilfstakt HT ab und gewährleistet äußerst geringe Laufzeitunterschiede an ihren Signalausgängen. Ein typischer Wert für die Laufzeitunterschiede an den Signalausgängen ist 0,5 nsec.

Die Steuereinheit SE ist speziell für die mit ihr zusammenwirkenden Systemeinheiten E1, E2 und Übertragungsspeicher L zugeschnitten. Die Steuereinheit SE ist so aufgebaut oder programmiert, daß sie die Laufzeitbedingungen, die zum ordnungsgemäßen Datenübertragungsbetrieb der mit ihr verbundenen Einheiten erforderlich sind, erfüllt. Solche Laufzeiten sind:

t-DV ... data valid, das ist die Zeit, die vergeht, bis Daten D, die mit einer positiven Taktflanke einer Systemeinheit E1, E2 ausgegeben werden, tatsächlich am Ausgang der Systemeinheit E1, E2 verfügbar sind.

t-SU ... set up, das ist die Zeit, in der Daten am Eingang einer Systemeinheit E1, E2 anliegen müssen, bevor mit einer positiven Taktflanke der empfangenden Systemeinheit E1, E2 die Daten übernommen werden können,

t-Lat ... latch, das ist die Laufzeit innerhalb des Übertragungsspeichers L vom Eingang zum Ausgang.

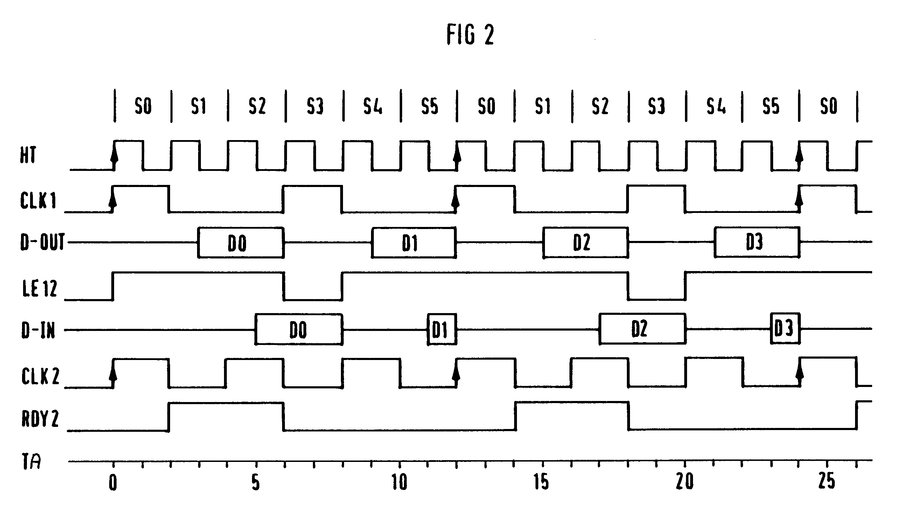

In Figur 2 ist nun ein Impulsdiagramm einer Datenübertragung von der ersten Systemeinheit E1 zur zweiten Systemeinheit E2 dargestellt. Die erste Systemeinheit E1 arbeitet mit einem ersten Systemtakt CLK1 von 33 MHz und die zweite Systemeinheit E2 arbeitet mit einem zweiten Systemtakt CLK2 von 50 MHz. Der kleinste gemeinsame Nenner dieser beiden Taktfrequenzen ist 100 MHz. Der Hilfstakt HT hat entsprechend eine Frequenz von 100 MHz. Am linken Rand des Impulsdiagramms aus Figur 2 tritt bei allen drei Takten zu einem Zeitpunkt TA0 auf der in der letzten Zeile des Impulsdiagramms eingetragenen ersten Zeitachse TA eine positive Taktflanke auf. Bei der sechsten positiven Taktflanke des Hilfstaktes HT nach dem Zeitpunkt TA0, also zum Zeitpunkt TA12 wiederholt sich erstmalig nach dem Zeitpunkt TA0, daß bei allen Takten gleichzeitig eine positive Taktflanke auftritt. Das zwischen dem Zeitpunkt TA0 und dem Zeitpunkt TA12 liegende Zeitintervall wiederholt sich erstmalig zwischen dem Zeitpunkt TA12 und dem Zeitpunkt TA24 usw..

Jedes dieser Zeitintervalle ist in sechs Sektoren S0 bis S5 eingeteilt. Jeder Sektor S0 bis S5 umfaßt eine Taktperiode des Hilfstaktes HT, also 10 nsec. Für jeden Sektor S0 bis S5 ist abhängig von den an die Steuereinheit SE angeschlossenen Einheiten E1, E2, L ein bestimmter Wert des ersten Speicher-Steuerungssignals LE12 und des zweiten Gültigkeitssignals RDY2 festgelegt. Damit ist gewährleistet, daß eine Laufzeitverletzung unmöglich ist.

Das Einschreiben von Daten D in den Übertragungsspeicher L ist immer dann möglich, wenn das erste Speicher-Steuerungssignal LE12 "High"-Zustand aufweist. Bei "Low"-Zustand des ersten Speicher-Steuerungssignals LE12 bleiben die in den Übertragungsspeicher L geschriebenen Daten D erhalten und können ebenso wie auch beim "High"-Zustand des ersten Speicher-Steuerungssignals LE12 von der zweiten Systemeinheit E2 aus dem Übertragungsspeicher L gelesen werden. Das zweite Gültigkeitssignal RDY2 signalisiert der zweiten Systemeinheit E2 mit einem "Low"-Zustand, daß gültige Daten D am Ausgang des Übertragungsspeichers L vorliegen. Die zweite Systemeinheit E2 kann dann mit einer positiven Taktflanke diese Daten D übernehmen. Bei "High"-Zustand des zweiten Gültigkeitssignals RDY2 liegen keine gültigen Daten D vor.

Eine Datenübertragung wird durch die Übertragung eines ersten Systemeinheit-Auswahlsignals CS1 (siehe Figur 1) von der ersten Systemeinheit E1 zur Steuereinheit SE eingeleitet. Dieses erste Systemeinheit-Auswahlsignal CS1 enthält die Information, zu welcher Systemeinheit E2 die erste Systemeinheit E1 Daten D übertragen will. Die Benennung ist besonders dann wichtig, wenn mehr als zwei Systemeinheiten E1, E2 im Datenverarbeitungssystem enthalten sind. Die Datenübertragung erfolgt wortweise. In diesem Beispiel wird nun davon ausgegangen, daß im Anschluß an dieses erste Systemeinheit-Auswahlsignal CS1 der erste Sektor S0 zum Zeitpunkt TA0 folgt. Mit der positiven Taktflanke des ersten Systemtakts CLK1 zum Zeitpunkt TA0 sendet die erste Systemeinheit E1 ein Datenwort D0 an den Übertragungsspelcher L. Nach der Laufzeit t-DV, also zum Zeitpunkt TA3 ist dieses Datenwort D0 am Ausgang der ersten Systemeinheit E1 verfügbar. Diese Verfügbarkeit ist in der dritten Zeile D-OUT des Impulsdiagramms dargestellt. Da durch den vom Zeitpunkt TA0 bis zum Zeitpunkt TA6 vorliegenden "High"-Zustand des ersten Speicher-Steuerungssignals LE12 der Übertragungsspeicher L zur Aufnahme von Daten D freigegeben ist, wird zum Zeitpunkt TA3 das Datenwort D0 in den Übertragungsspeicher L übernommen. Das Datenwort D0 erscheint nach der internen Laufzeit im Übertragungsspeicher L, also nach t-Lat = 10 nsec zum Zeitpunkt TA5, am Ausgang des Übertragungsspeichers L. Diese Verfügbarkeit des Datenwortes D0 ist in der fünften Zeile D-IN des Impulsdiagramms dargestellt. Das Datenwort D0 kann nun frühestens nach Ablauf der Laufzeit t-SU = 5 nsec in die zweite Systemeinheit E2 mit einer positiven Taktflanke des zweiten Systemtaktes CLK2 übernommen werden. Dies ist durch einen Zustandswechsel von "High" nach "Low" des zweiten Gültigkeitssignals RDY2 zum Zeitpunkt TA6 gewährleistet. Zum Zeitpunkt TA6 wechselt auch der Zustand des ersten Speicher-Steuerungssignals LE12 von "High" nach "Low". Ein Neubeschreiben des Übertragungsspeichers L im Sektor S3, also vom Zeitpunkt TA6 bis zum Zeitpunkt TA8 ist nicht möglich. Das Datenwort D0 bleibt im Übertragungsspeicher L erhalten. Erst zum Zeitpunkt TA8 tritt im zweiten Systemtakt CLK2 eine positive Flanke auf, mit der das Datenwort D0 in die zweite Systemeinheit übernommen wird. Anschliessend wird durch das erste Speicher-Steuerungssignal LE12 der Übertragungsspeicher L wieder zum Beschreiben freigegeben.

Ein bereits zum Zeitpunkt TA6 mit der steigenden Flanke des ersten Systemtaktes CLK1 gesendetes weiteres Datenwort D1 wird nach der Laufzeit t-DV zum Zeitpunkt TA9 (siehe Zeile D-OUT) gültig. Da der Übertragungsspeicher L zu diesem Zeitpunkt zur Aufnahme von Daten D freigeschaltet ist, wird das Datenwort D1 sofort in den Übertragungsspeicher L übernomnen. Dort erscheint es nach der Laufzeit t-Lat, also zum Zeitpunkt TA11 am Ausgang. Nach Ablauf der Laufzeit t-SU kann dieses Datenwort D1 bereits wieder in die zweite Systemeinheit E2 übernommen werden. Da zu diesem Zeitpunkt TA12 im zweiten Systemtakt CLK2 gerade eine positive Flanke auftritt, erfolgt die Datenübernahme zu diesem Zeitpunkt TA12.

Da zum Zeitpunkt TA12 das Datenwort D1 in die zweite Systemeinheit E2 übernommen wird, bleibt das erste Speicher-Steuerungssignal LE12 im Zustand "High", so daß der Übertragungsspeicher L sofort wieder beschrieben werden kann. Das erste Zeitintervall mit seinen sechs Sektoren S0 bis S5 ist damit abgearbeitet. Der Impulsablauf im nachfolgenden Intervall vom Zeitpunkt TA12 bis zum Zeitpunkt TA24 ist identisch zum vorhergehenden Intervall. Zum Zeitpunkt TA12 sendet die erste Systemeinheit E1 ein weiteres Datenwort D2, das wirksam mit einer positiven Taktflanke des zweiten Systemtaktes CLK2 zum Zeitpunkt TA20 in die zweite Systemeinheit E2 übernommen wird. Ein von der ersten Systemeinheit zum Zeitpunkt TA18 gesendetes weiteres Datenwort D3 wird zum Zeitpunkt TA24 von der zweiten Systemeinheit E2 übernommen. Dieser Vorgang wiederholt sich, solange die erste Systemeinheit E1 Daten D an die zweite Systemeinheit übertragen will und dies der Steuereinheit SE mit dem ersten Systemeinheit-Auswahlsignal CS1 mitteilt.

Bei der oben beschriebenen Datenübertragung werden die bauteilspezifischen Laufzeiten in keinem Fall verletzt, wodurch ein sicherer Datenaustausch erreicht wird. Sowohl das erste Speicher-Steuerungssignal LE12 als auch das zweite Gültigkeitssignal RDY2 wechseln ihre Zustände stets so, daß keine Laufzeitverletzung auftritt. Bei der Auslegung der Steuereinheit SE wird auf Grund der Laufzeiten der angeschlossenen Systemeinheiten E1, E2 und des angeschlossenen Übertragungsspeichers L eine Wahrheitstabelle für jeden Sektor S0..5 aufgestellt. Im Fall der oben beschriebenen Datenübertragung lauten diese Wahrheitstabellen wie folgt:

| | S0 | S1 | S2 | S3 | S4 | S5 |
|---|---|---|---|---|---|---|
| CLK1 | H | L | L | H | L | L |
| CLK2 | H | L | H | L | H | L |
| LE12 | H | H | H | L | H | H |
| RDY2 | L | H | H | L | L | L |

Die Datenübertragung erfolgt auf Grund dieser Maßnahmen in einer für die erste Systemeinheit E1 maximalen Geschwindigkeit.

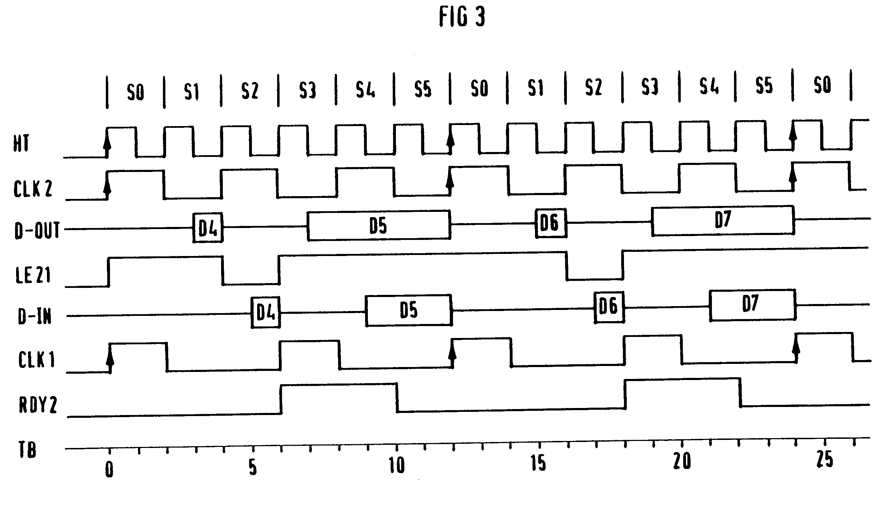

Der Datentransfer in die umgekehrte Richtung, also von der zweiten Systemeinheit E2 zur ersten Systemeinheit E1 erfolgt gemäß dem in Figur 3 dargestellten Impulsdiagramm. Zum Zeitpunkt TB0 auf der zweiten Zeitleiste TB wechseln der Hilfstakt HT, der zweite Systemtakt CLK2 und der erste Systemtakt CLK1 mit einer positiven Flanke in den "High"-Zustand. Die zweite Systemeinheit E2 hat zu diesem Zeitpunkt bereits der Steuereinheit SE mit Hilfe des zweiten Systemeinheit-Auswahlsignals CS2 (siehe Figur 1) ihren Datenübertragungswunsch an die erste Systemeinheit E1 mitgeteilt. Mit der positiven Flanke des zweiten Systemtaktes CLK2 sendet die zweite Systemeinheit E2 ein Datenwort D4. Nach der Laufzeit t-DV von 15 nsec, also zum Zeitpunkt TB3 ist dieses Datenwort D4 am Ausgang der zweiten Systemeinheit E2 verfügbar. Da das zweite Speicher-Steuerungssignal LE21 zu diesem Zeitpunkt TB3 "High"-Zustand aufweist, wird das Datenwort D4 sofort in den Übertragungsspeicher L übernommen. Um ein Überschreiben des Übertragungsspeichers L und damit ein Löschen des Datenwortes D4 wirksam zu verhindern, wechselt zum Zeitpunkt TB4 das zweite Speicher-Steuerungssignal LE21 in den "Low"-Zustand. Zu diesem Zeitpunkt sendet die zweite Systemeinheit E2 ein weiteres Datenwort D5 an den Übertragungsspeicher L. Das Datenwort D4 erscheint nach der Laufzeit t-Lat, also zum Zeitpunkt TB5 am Ausgang des Übertragungsspeichers L. Nach der Laufzeit t-SU kann das Datenwort D4 von der ersten Systemeinheit E1 übernommen werden. Zu diesem Zeitpunkt TB6 tritt im ersten Systemtakt CLK1 eine positive Taktflanke auf, wodurch das Datenwort D4 sofort übernommen wird.

Aus den nachfolgend beschriebenen Impulsverläufen ergibt sich, daß das zum Zeitpunkt TB4 gesendete Datenwort D5 erst zum Zeitpunkt TB12 von der ersten Systemeinheit E1 übernommen werden kann. Die zweite Systemeinheit E2 ist jedoch in der Lage mit positiver Taktflanke zum Zeitpunkt TB8 ein weiteres Datenwort D6 zu senden. Da dies zu einer Datenkollision führen würde, wird durch Setzen des zweiten Gültigkeitssignals RDY2 in den "High"-Zustand zwischen den Zeitpunkten TB6 und TB10 das Senden des weiteren Datenwortes D6 zum Zeitpunkt TB8 wirksam unterbunden. Das Datenwort D5 liegt dadurch bis zum Zeitpunkt TB12 stabil am Übertragungsspeicher L an.

Das mit der positiven Taktflanke zum Zeitpunkt TB4 gesendete weitere Datenwort D5 erscheint zum Zeitpunkt TB7 am Ausgang der zweiten Systemeinheit E2. Da das zweite Speicher-Steuerungssignal LE21 zu diesem Zeitpunkt TB7 "High"-Zustand aufweist, wird dieses Datenwort D5 sofort in den Übertragungsspeicher L übernommen. Am Ausgang des Übertragungsspeichers erscheint es zum Zeitpunkt TB9. Da das Datenwort D5 bis zum Zeitpunkt TB12 am Ausgang der zweiten Systemeinheit E2 verfügbar bleibt, ist ein Wechsel des zweiten Speicher-Steuerungssignals LE21 in den "Low"-Zustand nicht erforderlich. Das zweite Gültigkeitssignal RDY2 wechselt nach der Laufzeit T-SU zum Zeitpunkt TB10 vom "High"- in den "Low"-Zustand und ermöglicht so der zweiten Systemeinheit E2 ab diesem Zeitpunkt TB10 das Senden des Datenworts D6. Der erste Systemtakt CLK1 zeigt zum Zeitpunkt TB12 eine positive Flanke, mit der das Datenwort D5 in die erste Systemeinheit E1 übernommen wird.

Zum Zeitpunkt TB12 ist das mit dem Zeitpunkt TB0 begonnene erste Intervall abgeschlossen. Der Hilfstakt HT, der zweite Systemtakt CLK2 und der erste Systemtakt CLK1 zeigen zu diesem Zeitpunkt TB12 eine positive Flanke. Der Vorgang der Datenübertragung wiederholt sich im nachfolgenden Zeitintervall bis zum Zeitpunkt TB24. In diesem Zeitintervall werden weitere Datenworte D6 und D7 von der zweiten Systemeinheit E2 zur ersten Systemeinheit E1 übertragen. Die Intervalle sind ebenso wie in Figur 2 in sechs Sektoren S0..5 eingeteilt. Die Wahrheitstabellen für diese Sektoren lauten:

|      | S0 | S1 | S2 | S3 | S4 | S5 |
|------|----|----|----|----|----|----|
| CLK1 | H  | L  | L  | H  | L  | L  |
| CLK2 | H  | L  | H  | L  | H  | L  |
| LE21 | H  | H  | L  | H  | H  | H  |
| RDY2 | L  | L  | L  | H  | H  | L  |

Damit ist auch eine sichere Datenübertragung von der zweiten Systemeinheit E2 zur ersten Systemeinheit E1 gewährleistet.

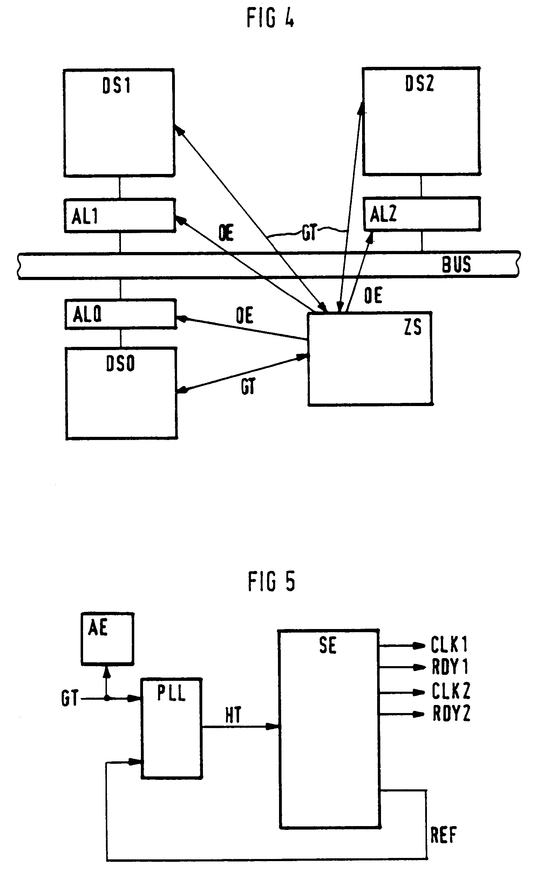

In Figur 4 ist in Form eines Blockschaltbildes die Zusammenschaltung mehrerer Datenverarbeitungssysteme DS1, DS2, DS0 zu einer Datenverarbeitungsanlage dargestellt. Um die Performance der Datenverarbeitungsanlage zu steigern, ist es vorteilhaft, jedes Datenverarbeitungssystem DS1, DS2, DS0 ebenso wie die Systemeinheiten E1, E2 innerhalb eines Datenverbeitungssystems DS0 mit ihrer maximalen Taktfrequenz arbeiten zu lassen. Um aber die Performance im Zuge der Datenübertragung zwischen den Datenverarbeitungssystemen DS1, DS2, DS0 nicht zu verschlechtern, kann das oben beschriebene Übergeben der Daten D auch beim Datentransfer zwischen den Datenverarbeitungssystemen DS1, DS2, DS0 angewendet werden.

Dazu wird lediglich zwischen dem vorhandenen Datenübertragungssystem BUS und den Datenverarbeitungssystemen DS1, DS2, DS0 jeweils ein Außenübertragungsspeicher AL1, AL2, AL0 eingefügt. Dieser Außenübertragungsspeicher AL1, AL2, AL0 kann auch Bestandteil des Übertragungsspeichers L des jeweiligen Datenverarbeitungssystems DS1, DS2, DS0 sein. Eine Zentralsteuereinheit ZS koordiniert den Datentransfer. Zu diesem Zweck stellt die Zentralsteuereinheit ZS über Taktleitungen jedem Datenübertragungssystem DS1, DS2, DS0 einen Grundtakt GT zur Verfügung und steuert die Bustreiber der Außenübertragungsspeicher AL1, AL2, AL0 mit Hilfe von Steuerungssignalen 0E.

Die Bedingung der Synchronisierung der Taktverläufe zwischen den einzelnen Datenverarbeitungssystemen DS1, DS2, DS0 wird durch die in Figur 5 im Prinzip dargestellte Schaltung erreicht. Die Zentralsteuereinheit ZS stellt jedem Datenverarbeitungssystem DS1, DS2, DS0 einen Grundtakt GT zur Verfügung. Die Periodendauer des Grundtaktes GT ist so gewählt, daß sie mit der Intervalldauer innerhalb der Datenverarbeitungssysteme DS1, DS2, DS0 identisch ist. Es sind damit für die gesamte Datenverarbeitungsanlage mehrere Sektoren S0..X vorhanden, die für alle Datenverarbeitungssysteme gleich sind und zur Bildung von Wahrheitstabellen herangezogen werden. Mit Hilfe einer "Phase-Locked-Loop"-Schaltung PLL, die die Ausgänge der Steuereinheit SE mit dem Grundtakt GT synchronisiert, ist der exakte erforderliche Zeitbezug zwischen den Takten CLK gewährleistet. Die Steuereinheit SE erzeugt einen Referenztakt REF, dessen Frequenz der Frequenz des Grundtaktes angepaßt ist. Diese Frequenz ist beispielsweise 1/16 des Hilfstaktes HT. Die "Phase-Locked-Loop"-Schaltung PLL gibt den Hilfstakt HT an die Steuereinheit SE. Durch die Verwendung der "Phase-Locked-Loop"-Schaltung PLL werden die gegebenenfalls unterschiedlichen Laufzeiten der einzelnen Datenverarbeitungssysteme DS1, DS2, DS0 so kompensiert, daß alle Signalflanken der Datenverarbeitungsanlage auf größtmögliche Übereinstimmung ($\Delta t < l$ nsec) gebracht werden.

Der Grundtakt GT kann zusätzlich in vorteilhafter Weise zur Signalisierung der Zentralsteuereinheit ZS an die Datenverarbeitungssysteme DS1, DS2, DS0 verwendet werden. Anstelle beispielsweise spezielle Reset-Leitungen zu den Datenverarbeitungssystemen DS1, DS2, DS0 zu legen, kann ein Reset durch ein bestimmtes Taktverhältnis des Grundtaktes GT von der Zentralsteuereinheit ZS an die Datenverarbeitungssysteme DS1, DS2, DS0 übertragen werden. Die Auswertung des Taktverhältnisses, mit dem auch beliebige andere Informationen zu den Datenverarbeitungssystemen hin übertragen werden können, erfolgt mit Hilfe einer jedem Datenverarbeitungssystem DS1, DS2, DS0 zugeordneten Auswerteeinheit AE.

**Patentansprüche**

1.  Datenverarbeitungssystem, bestehend aus mindestens zwei Systemeinheiten (E1,E2), die untereinander Daten (D) über eine Übertragungsvorrichtung (SE, L) austauschen, wobei
    - mindestens zwei der Systemeinheiten (E1,E2) mit einer unterschiedlichen Taktfrequenz (CLK1, CLK2) arbeiten,
    - die Systemeinheiten (E1,E2) jeweils mit dem benötigten Takt (CLK1, CLK2) versorgt werden, wodurch die zeitlichen Beziehungen der Takte (CLK1, CLK2) untereinander festgelegt sind,
    - der Datenaustausch zwischen den Systemeinheiten (E1,E2) gesteuert wird,
    **dadurch gekennzeichnet**, daß
    - eine Steuereinheit (SE) von einem Hilfstakt (HT), dessen Frequenz der kleinste gemeinsame Nenner oder ein Vielfaches des kleinsten gemeinsamen Nenners der im Datenverarbeitungssystem verwendeten Taktfrequenzen (CLK1, CLK2) der Systemeinheiten (E1,E2) ist, den für die Systemeinheiten (E1,E2) jeweils benötigten Takt (CLK1, CLK2) und Steuersignale (RDY1, RDY2, LE12, LE21) zur Steuerung des Datenaustausches ableitet, und
    - die Steuereinheit (SE) die einzelnen Systemeinheiten (E1,E2) mit der ihnen zugeordneten Taktfrequenz (CLK1, CLK2) versorgt und die Steuersignale (RDY1, RDY2, LE12, LE21) an die Systemeinheiten (E1,E2) und an einen gemeinsamen Übertragungsspeicher (L) ausgibt.

2.  Datenverarbeitungssystem nach Anspruch 1, **dadurch gekennzeichnet**, daß der Hilfstakt (HT) der Steuereinheit (SE) von außen zugeführt wird.

3.  Datenverarbeitungssystem nach einem der vorhergehenden Ansprüche, **dadurch gekennzeichnet**, daß der Übertragungsspeicher (L) ein zustandsgesteuerter Speicher ist.

4.  Datenverarbeitungssystem nach einem der vorhergehenden Ansprüche, **dadurch gekennzeichnet**, daß mehrere Datenverarbeitungssysteme (DS0..2) zu einer Datenverarbeitungsanlage zusammengefaßt sind und daß eine zentrale Signalisierungseinheit (ZS) vorgesehen ist, die sämtliche Datenverarbeitungssysteme (DS0..2) mit dem der Synchronisierung dienenden Grundtakt (GT) versorgt.

5. Datenverarbeitungssystem nach Anspruch 4, **dadurch gekennzeichnet**, daß das Taktverhältnis des Grundtaktes (GT) veränderbar ist.

6. Datenverarbeitungssystem nach einem der Ansprüche 4 oder 5, **dadurch gekennzeichnet**, daß die Steuereinheit (SE) aus dem Hilfstakt (HT) einen Referenztakt (REF) erzeugt, dessen Frequenz der Frequenz des Grundtaktes (GT) entspricht und daß der Referenztakt (REF) zum Grundtakt (GT) mit Hilfe einer "Phase-Locked-Loop"-Schaltung (PLL) synchronisiert wird.

## Claims

1. Data processing system, composed of at least two system units (E1, E2) which exchange data (D) between one another by means of a transmission device (SE, L), where
   - at least two of the system units (E1, E2) operate at different clock pulse frequencies (CLK1, CLK2),
   - the system units (E1, E2) are in each case supplied with the required clock pulse (CLK1, CLK2), the temporal relationships of the clock pulses (CLK1, CLK2) being fixed with respect to one another,
   - exchange of data between the system units (E1, E2) is controlled,
   characterized in that
   - a control unit (SE) of an auxiliary clock pulse (HT), the frequency of which is the lowest common denominator or a multiple of the lowest common denominator of the clock pulse frequencies (CLK1, CLK2), which are used in the data processing system, of the system units (E1, E2), which control unit (SE) derives the clock pulse (CLK1, CLK2) which is respectively required for the system units (E1, E2) and control signals (RDY1, RDY2, LE12, LE21) for controlling the exchange of data, and
   - the control unit (SE) supplies the individual system units (E1, E2) with the clock pulse frequency (CLK1, CLK2) assigned to them and outputs the control signals (RDY1, RDY2, LE12, LE21) to the system units (E1, E2) and to a common transmission memory (L).

2. Data processing system according to Claim 1, characterized in that the auxiliary clock pulse (HT) of the control unit (SE) is supplied externally.

3. Data processing system according to one of the preceding claims, characterized in that the transmission memory (L) is a level-operated memory.

4. Data processing system according to one of the preceding claims, characterized in that a plurality of data processing systems (DS0..2) are combined to form a data processing system and that a central signalling unit (ZS) is provided which supplies all the data processing systems (DS0..2) with the basic clock pulse (GT) used for synchronization.

5. Data processing system according to Claim 4, characterized in that the clock pulse ratio of the basic clock pulse (GT) can be modified.

6. Data processing system according to one of the Claims 4 or 5, characterized in that the control unit (SE) generates from the auxiliary clock pulse (HT) a reference clock pulse (REF), the frequency of which corresponds to the frequency of the basic clock pulse (GT) and that the reference clock pulse (REF) is synchronized with the basic clock pulse (GT) using a "phase locked loop" circuit (PLL).

## Revendications

1. Système de traitement de données, constitué par au moins deux unités (E1,E2), qui échangent entre elles les données (D) par l'intermédiaire d'un dispositif de transmission (SE,L), et dans lequel
   - au moins deux des unités (E1,E2) du système travaillent à des fréquences de cadence différentes (CLK1,CLK2),
   - les unités (E1,E2) du système sont alimentées respectivement par la cadence nécessaire (CLK1,CLK2), ce qui a pour effet que les relations temporelles des cadences (CLK1,CLK2) sont fixées différemment,
   - l'échange de données entre les unités (E1,E2) du système est commandé,

caractérisé par le fait que

- à partir d'une cadence auxiliaire (HT), dont la fréquence est le plus petit dénominateur commun ou un multiple du plus petit dénominateur commun des fréquences de cadence (CLK1,CLK2), utilisées dans le système de traitement de données, des unités (E1,E2) de ce système, une unité de commande (SE) dérive les cadences (CLK1,CLK2) respectivement nécessaires aux unités (E1,E2) du système, et des signaux de commande (RDY1, RDY2, LE12, LE21) pour la commande de l'échange de données, et
- l'unité de commande (SE) alimente les différentes unités (E1,E2) du système à la fréquence de cadence (CLK1, CLK2), qui leur est associée, et envoie les signaux de commande (RDY1, RDY2, LE12, LE21) aux unités (E1,E2) du système et à une mémoire commune de transmission (L).

2.  Système de traitement de données suivant la revendication 1, caractérisé par le fait que la cadence auxiliaire (HT) de l'unité de commande (SE) est envoyée à partir de l'extérieur.

3.  Système de traitement de données suivant l'une des revendications précédentes, caractérisé par le fait que la mémoire de transmission (L) est une mémoire commandée en fonction d'états.

4.  Système de traitement de données suivant l'une des revendications précédentes, caractérisé par le fait que plusieurs systèmes de traitement de données (DS0...2) sont rassemblés pour former une installation de traitement de données et qu'il est prévu une unité centrale de signalisation (ZS) , qui alimente tous les systèmes de traitement de données (DS0...2) à la cadence de base (GT) utilisée pour la synchronisation.

5.  Système de traitement de données suivant la revendication 4, caractérisé par le fait que le rapport de la cadence de base (GT) est variable.

6.  Système de traitement de données suivant l'une des revendications 4 ou 5, caractérisé par le fait que l'unité de commande (SE) produit, à partir de la cadence auxiliaire (HT), une cadence de référence (REF), dont la fréquence correspond à la fréquence de la cadence de base (GT), et que la cadence de référence (REF) est synchronisée sur la fréquence de base (GT) à l'aide d'un circuit "Phase-Locked-Loop" (PLL).

## FIG 1

# FIG 2

EP 0 576 711 B1

FIG 3

## FIG 4

## FIG 5